(19) **Europäisches Patentamt / European Patent Office / Office européen des brevets**

(11) **EP 4 560 471 A1**

(12) **EUROPEAN PATENT APPLICATION**
published in accordance with Art. 153(4) EPC

(43) Date of publication:
**28.05.2025 Bulletin 2025/22**

(21) Application number: **23854078.5**

(22) Date of filing: **20.06.2023**

(51) International Patent Classification (IPC):
**G06F 9/48** (2006.01)

(52) Cooperative Patent Classification (CPC):
**G06F 9/48; G06F 9/50;** Y02D 10/00

(86) International application number:
**PCT/CN2023/101278**

(87) International publication number:
**WO 2024/037173 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.08.2022 CN 202210988472**

(71) Applicant: **Huawei Technologies Co., Ltd.**
**Shenzhen, Guangdong 518129 (CN)**

(72) Inventors:
- **DING, Zhaohui**
  **Shenzhen, Guangdong 518129 (CN)**
- **ZHU, Bo**
  **Shenzhen, Guangdong 518129 (CN)**
- **WANG, Fei**
  **Shenzhen, Guangdong 518129 (CN)**
- **ZHOU, Fengfan**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **SCHEDULER, JOB SCHEDULING METHOD AND RELATED DEVICE**

(57) This application provides a scheduler. The scheduler is configured to manage a plurality of clusters and includes a management module and a proxy module. The management module is configured to obtain a to-be-processed job; determine, from the plurality of clusters, a target cluster for processing the job; and deliver the job to the proxy module. The proxy module is configured to indicate the target cluster to schedule a resource for the job, and obtain target data in a process in which the target cluster schedules the resource for the job. The target data is data required for executing the job. In this way, the target cluster can concurrently perform, under scheduling of the scheduler, a process of transmitting the target data and a process of scheduling the resource, so that waiting duration of a process from submission to execution of the job can be effectively reduced, thereby improving job processing efficiency. In addition, the allocated resource can be prevented from being in an idle state for long duration, so that a problem of a resource waste can be alleviated. In addition, this application further provides a corresponding job scheduling method and a related device.

FIG. 4A

**(Cont. next page)**

CONT. FROM FIG. 4A

S404: Indicate the target cluster to obtain the target data in a process of scheduling a resource for the job

S4041: Obtain first duration $T_q$ in which the target cluster schedules the resource for the job and second duration $T_t$ in which the target cluster obtains the target data

S4042: Compare the first duration $T_q$ and the second duration $T_t$

S4043: When $T_q$ is greater than $T_t$, indicate the target cluster to schedule the resource for the job, and obtain the target data in the process of scheduling the resource for the job

S4044: When $T_q$ is not greater than $T_t$, indicate, at a moment 2, the target cluster to obtain the target data, and indicate, at a moment 1, the target cluster to schedule the resource for the job, where duration of an interval between the moment 2 and the moment 1 is a difference between $T_q$ and $T_t$

Indicate to schedule the resource

Receive the target data sent by another cluster

FIG. 4B

## Description

This application claims priority to Chinese Patent Application No. 202210988472.7, filed with the China National Intellectual Property Administration on August 17, 2022 and entitled "SCHEDULER, JOB SCHEDULING METHOD, AND RELATED DEVICE", which is incorporated herein by reference in its entirety.

## TECHNICAL FIELD

This application relates to the field of internet technologies, and in particular, to a scheduler, a job scheduling method, and a related device.

## BACKGROUND

A computing network (computing network) usually includes a plurality of cross-area data centers that are interconnected through a wide area network, and a computing resource, a storage resource, and a network resource in the computing network can be flexibly scheduled based on a requirement. A cluster scheduler, for example, one or more of a simple Linux utility for resource management (simple Linux utility for resource management, SLURM) in a high performance computing (high performance computing, HPC) scenario, a load sharing facility (load sharing facility, LSF), a portable batch system (portable batch system, PBS), Kubernetes, and a yet another resource negotiator (yet another resource negotiator, YARN), is configured inside each data center. In addition, a cross-data center scheduler is further deployed in the computing network. The scheduler dynamically connects to the cluster scheduler in each data center, to implement cross-data center resource scheduling.

Currently, the scheduler schedules a job of a user and data required for processing the job to a cluster in a data center for processing. In this process, if waiting duration of a process from submission to execution of the job of the user is excessively long, user experience may be affected because the job of the user is left unprocessed for long duration. Therefore, how to improve job processing efficiency and improve user experience becomes an important problem that needs to be urgently resolved.

## SUMMARY

This application provides a scheduler, configured to reduce waiting duration from submission to execution of a job, so that job processing efficiency is improved, thereby improving user experience. In addition, this application further provides a job scheduling method, a computer-readable storage medium, and a computer program product.

According to a first aspect, this application provides a scheduler. The scheduler is configured to manage a plurality of clusters and includes a management module and a proxy module. The management module is configured to obtain a to-be-processed job, for example, a job submitted by a user by using a terminal or a client; determine, from the plurality of clusters, a target cluster for processing the job; and deliver the job to the proxy module. The proxy module is configured to indicate the target cluster to schedule a resource for the job, and obtain target data in a process of scheduling the resource for the job. The target data is data required for executing the job.

In this way, the target cluster can concurrently perform, under scheduling of the scheduler, a process of transmitting the target data and the process of scheduling the resource, to effectively reduce waiting duration of a process from submission to execution of the job, so that job processing efficiency is improved, thereby improving user experience. In addition, the resource allocated by the target cluster to the job can be prevented from being in an idle state for long duration, so that a problem of a resource waste can be alleviated.

In a possible implementation, when determining, from the plurality of clusters, the target cluster for processing the job, the management module specifically estimates first duration in which each of the plurality of clusters schedules a resource for the job; calculates second duration in which each of the plurality of clusters obtains the target data; and then uses a larger value in the first duration and the second duration as waiting duration for the cluster to process the job, to use a cluster with smallest waiting duration in the plurality of clusters as the target cluster. In this way, the management module schedules the job to the target cluster with the smallest waiting duration. This helps reduce time consumed to process the job, in other words, the job processing efficiency can be further improved.

Optionally, the management module may alternatively schedule, based on load of each cluster, the job to a cluster with smallest load for processing, to implement load balancing in a computing network.

In a possible implementation, the management module is further configured to estimate first duration in which the target cluster schedules the resource for the job; calculate second duration in which the target cluster obtains the target data; and send the first duration and the second duration to the proxy module. In this case, when indicating the target cluster to schedule the resource for the job, and obtain the target data in the process of scheduling the resource for the job, the proxy module may specifically indicate, when the first duration is greater than the second duration (in other words, time consumed for resource scheduling is greater than time consumed for data obtaining), the target cluster to obtain the target data in the process of scheduling the resource for the job. In this way, the target cluster can concurrently perform the process of scheduling the resource and the process of obtaining the target data, so that after completing resource scheduling, the target cluster can execute the job by using the scheduled resource, to improve processing efficiency of the service.

Optionally, after the management module delivers the job to the proxy module, the proxy module may alternatively estimate the first duration in which the target cluster schedules the resource for the job, and calculate the second duration in which the target cluster obtains the target data, to indicate, based on the first duration and the second duration, the target cluster to obtain the target data in the process of scheduling the resource for the job.

In a possible implementation, the management module is alternatively configured to estimate first duration in which the target cluster schedules the resource for the job; calculate second duration in which the target cluster obtains the target data; and send the first duration and the second duration to the proxy module. In this case, when indicating the target cluster to schedule the resource for the job, and obtain the target data in the process of scheduling the resource for the job, the proxy module may specifically indicate, when the first duration is not greater than the second duration and at a first moment before indicating the target cluster to schedule the resource for the job, the target cluster to start to obtain the target data, and indicate, at a second moment, the target cluster to schedule the resource for the job. Duration of an interval between the first moment and the second moment is the second duration minus the first duration. In this way, the target cluster can first perform the process of obtaining the data, and then perform, in the process of obtaining the data, the process of scheduling the resource. Therefore, the target cluster ends, at a same moment or close moments, the process of scheduling the resource and the process of obtaining the data, to execute the job by using the scheduled resource. In this way, not only the job processing efficiency can be improved, but also a problem that the resource scheduled by the target cluster for the job is wasted due to waiting for the target cluster to obtain the target data can be avoided.

In a possible implementation, when estimating the first duration in which the target cluster schedules the resource for the job, the management module may specifically determine a target category to which the job belongs; calculate average duration in which the target cluster schedules a resource for a historical job of the target category; and obtain a currently available resource ratio and a historically available resource ratio that are of the target cluster. The currently available resource ratio is a ratio of a resource quantity of currently available resources of the target cluster to a resource quantity of total resources. The historically available resource ratio is a ratio of a resource quantity of available resources of the target cluster in a past time period to the resource quantity of total resources. In this way, the management module obtains, through estimation based on the average duration, the currently available resource ratio, and the historically available resource ratio, the first duration in which the target cluster schedules the resource for the job. In this way, the management module can obtain, through estimation by using time consumed by each cluster to schedule a resource for a job of a same category in the past time period, time consumed by the cluster to schedule a resource for a job submitted by a current user, to improve accuracy and reliability of estimation.

In a process of calculating the currently available resource ratio, when the available resource includes one resource, for example, includes a computing resource, the currently available resource ratio may be specifically a ratio of a quantity of available processors (or processor cores) in the target cluster to a total quantity of processors (or a total quantity of processor cores). When the available resource includes a plurality of types of resources, for example, includes a computing resource, a storage resource, and a network resource, the currently available resource ratio may be obtained by performing weighted summation based on a ratio of a resource quantity of available resources of each type to a resource quantity of total resources of the type, or may be obtained through calculation in another manner.

In a process of calculating the historically available resource ratio, the management module may count resource quantities of available resources when the target cluster respectively allocates resources to the historical job at a plurality of moments in the past time period. Then, the management module may calculate an average value of the resource quantities of available resources respectively corresponding to the plurality of moments, to further calculate a ratio of the average value of the resource quantities of available resources to the resource quantity of total resources of the target cluster. Alternatively, the management module may use a ratio of a resource quantity of available resources when the target cluster allocates a resource to the historical job at a past moment to the resource quantity of total resources of the target cluster as the historically available resource ratio.

In a possible implementation, the target category to which the job submitted by the user belongs is determined based on one or more of a category of a requested resource, a quantity of requested resources, a volume of data on which the job depends, an application to which the job belongs, a job priority, a queue in which the job is located, and a calculation instance to which the job belongs. Further, the target category may alternatively be determined based on a job owner. The job owner is a subject to which the job belongs, and may be a tenant, a user, or the like.

In a possible implementation, the proxy module is further configured to monitor third duration in which the target cluster schedules the resource for the job, and indicate, based on the third duration and the estimated first duration, the management module to send an adjustment instruction to a network controller of the target cluster. The adjustment instruction instructs the network controller to adjust a network bandwidth of the target cluster or adjust a quantity of network channels of the target cluster. In this way, when the duration in which the target cluster actually schedules the resource for the job is less than the estimated duration, the network bandwidth of the target cluster or the quantity of network channels is adjusted, so that the target cluster can end, at a same moment or close moments, the process of scheduling the resource and the process of obtaining the target data.

In a possible implementation, when the third duration is less than the first duration, and a difference between the first duration and the third duration is greater than a preset value, it indicates that time consumed by the target cluster to actually schedule the resource for the job is less than estimated time consumption. In this case, the adjustment instruction sent by the management module to the network controller instructs the network controller to increase the network bandwidth of the target cluster or increase the quantity of network channels of the target cluster. In this way, a rate at which the target cluster obtains the target data can be increased, so that time consumed by the target cluster to obtain the target data is reduced. Therefore, not only the job processing efficiency can be further improved, but also the problem that the resource scheduled by the target cluster for the job is wasted due to long-duration waiting for the target cluster to obtain the target data can be avoided.

In a possible implementation, when the third duration is greater than the first duration, and a difference between the third duration and the first duration is greater than a preset value, it indicates that time consumed by the target cluster to actually schedule the resource for the job is greater than estimated time consumption. In this case, the adjustment instruction sent by the management module to the network controller instructs the network controller to decrease the network bandwidth of the target cluster or decrease the quantity of network channels of the target cluster. In this way, after scheduling the resource for the job, the target cluster can further complete, at a close moment, the receiving of the target data, so that bandwidth resource consumption in the computing network can be reduced by decreasing the network bandwidth of the target cluster under a condition that the resource allocated by the target cluster to the job is not idle.

In a possible implementation, the management module and the proxy module may be deployed on one computing device, and the computing device is connected to the plurality of clusters, to manage the plurality of clusters.

In a possible implementation, the management module is deployed on a computing device, and the proxy module is deployed in the target cluster, so that the management module can control, by using the proxy module in the target cluster, the target cluster to concurrently perform the process of obtaining the data and the process of scheduling the resource.

According to a second aspect, this application provides a job scheduling method. The method is applied to a scheduler, and the scheduler includes a management module and a proxy module. Specifically, the management module obtains a to-be-processed job; determines, from a plurality of clusters, a target cluster for processing the job; and delivers the job to the proxy module. The proxy module indicates the target cluster to schedule a resource for the job, and obtain target data in a process of scheduling the resource for the job. The target data is data required for executing the job.

In a possible implementation, that the management module determines, from a plurality of clusters, a target cluster for processing the job includes: The management module estimates first duration in which each of the plurality of clusters schedules a resource for the job, and calculates second duration in which each of the plurality of clusters obtains the target data. Then the management module uses a larger value in the first duration and the second duration as waiting duration for the cluster to process the job, and uses a cluster with smallest waiting duration in the plurality of clusters as the target cluster.

Optionally, the management module may alternatively schedule, based on load of each cluster, the job to a cluster with smallest load for processing, to implement load balancing in a computing network.

In a possible implementation, before the proxy module indicates the target cluster to obtain the target data in the process of scheduling the resource for the job, the management module further estimates first duration in which the target cluster schedules the resource for the job; calculates second duration in which the target cluster obtains the target data; and sends the first duration and the second duration to the proxy module. In this way, when indicating the target cluster to obtain the target data in the process of scheduling the resource for the job, the proxy module may specifically indicate, when the first duration is greater than the second duration, the target cluster to schedule the resource for the job, and obtain the target data in the process of scheduling the resource for the job.

Optionally, after the management module delivers the job to the proxy module, the proxy module may alternatively estimate the first duration in which the target cluster schedules the resource for the job, and calculate the second duration in which the target cluster obtains the target data, to indicate, based on the first duration and the second duration, the target cluster to obtain the target data in the process of scheduling the resource for the job.

In a possible implementation, before the proxy module indicates the target cluster to obtain the target data in the process of scheduling the resource for the job, the management module further estimates first duration in which the target cluster schedules the resource for the job; calculates second duration in which the target cluster obtains the target data; and sends the first duration and the second duration to the proxy module. In this way, when indicating the target cluster to obtain the target data in the process of scheduling the resource for the job, the proxy module may specifically indicate, when the first duration is not greater than the second duration and at a first moment before indicating the target cluster to schedule the resource for the job, the target cluster to start to obtain the target data, and indicate, at a second moment, the target cluster to schedule the resource for the job. Duration of an interval between the first moment and the second moment is the second duration minus the first duration.

In a possible implementation, when estimating the first duration in which the target cluster schedules the resource for the job, the management module may specifically determine a target category to which the job belongs; calculate average duration in which the target cluster schedules a resource for a historical job of the target category; and obtain a currently available resource ratio and a historically available resource ratio that are of the target cluster. The currently available resource ratio is a ratio of a resource quantity of currently available resources of the target cluster to a resource quantity of total resources. The historically available resource ratio is a ratio of a resource quantity of available resources of the target cluster in a past time period to the resource quantity of total resources. In this way, the management module estimates, based on the average duration, the currently available resource ratio, and the historically available resource ratio, the first duration in which the target cluster schedules the resource for the job.

In a process of calculating the currently available resource ratio, when the available resource includes one resource, for example, includes a computing resource, the currently available resource ratio may be specifically a ratio of a quantity of available processors (or processor cores) in the target cluster to a total quantity of processors (or a total quantity of processor cores). When the available resource includes a plurality of types of resources, for example, includes a computing resource, a storage resource, and a network resource, the currently available resource ratio may be obtained by performing weighted summation based on a ratio of a resource quantity of available resources of each type to a resource quantity of total resources of the type, or may be obtained through calculation in another manner.

In a process of calculating the historically available resource ratio, the management module may count resource quantities of available resources when the target cluster respectively allocates resources to the historical job at a plurality of moments in the past time period. Then, the management module may calculate an average value of the resource quantities of available resources respectively corresponding to the plurality of moments, to further calculate a ratio of the average value of the resource quantities of available resources to the resource quantity of total resources of the target cluster. Alternatively, the management module may use a ratio of a resource quantity of available resources when the target cluster allocates a resource to the historical job at a past moment to the resource quantity of total resources of the target cluster as the historically available resource ratio.

In a possible implementation, the target category is determined based on one or more of a category of a requested resource, a quantity of requested resources, a volume of data on which the job depends, an application to which the job belongs, a job priority, a queue in which the job is located, and a calculation instance to which the job belongs. Optionally, the target category may alternatively be determined based on a job owner.

In a possible implementation, the proxy module may further monitor third duration in which the target cluster schedules the resource for the job, and indicate, based on the first duration and the third duration, the management module to send an adjustment instruction to a network controller of the target cluster. The adjustment instruction instructs the network controller to adjust a network bandwidth of the target cluster or adjust a quantity of network channels of the target cluster.

In a possible implementation, when the third duration is less than the first duration, and a difference between the first duration and the third duration is greater than a preset value, the adjustment instruction instructs the network controller to increase the network bandwidth of the target cluster or increase the quantity of network channels of the target cluster.

In a possible implementation, when the third duration is greater than the first duration, and a difference between the third duration and the first duration is greater than a preset value, the adjustment instruction instructs the network controller to decrease the network bandwidth of the target cluster or decrease the quantity of network channels of the target cluster.

In a possible implementation, the management module and the proxy module are deployed on one computing device, and the computing device is connected to the plurality of clusters.

In a possible implementation, the management module is deployed on a computing device, and the proxy module is deployed in the target cluster.

The job scheduling method provided in the second aspect corresponds to the scheduler provided in the first aspect. Therefore, for technical effects of the job scheduling method in any one of the second aspect and the possible implementations of the second aspect, refer to the technical effects of the first aspect and the corresponding implementations of the first aspect. Details are not described herein again.

According to a third aspect, this application provides a scheduler. The scheduler includes a processor and a memory. The memory is configured to store instructions. When the scheduler runs, the processor executes the instructions stored in the memory, to enable the scheduler to perform the steps performed by the management module and the proxy module in any one of the second aspect or the possible implementations of the second aspect. It should be noted that the memory may be integrated into the processor, or may be independent of the processor. The scheduler may further include a bus. The processor is connected to the memory through the bus. The memory may include a readable memory and a random access memory.

According to a fourth aspect, this application provides a scheduler. The scheduler includes a processor and a memory. The memory is configured to store instructions. When the scheduler runs, the processor executes the instructions stored in the memory, to enable the scheduler to perform the steps performed by the management module in any one of the second aspect or the possible implementations of the second aspect. It should be noted that the memory may be integrated into the processor, or may be independent of the processor. The scheduler may further include a bus. The processor is connected to the memory through the bus. The memory may include a readable memory and a random access memory.

According to a fifth aspect, this application provides a scheduler. The scheduler includes a processor and a memory. The memory is configured to store instructions. When the scheduler runs, the processor executes the instructions stored in the memory, to enable the scheduler to perform the steps performed by the proxy module in any one of the second aspect or the possible implementations of the second aspect. It should be noted that the memory may be integrated into the processor, or may be independent of the processor. The scheduler may further include a bus. The processor is connected to the memory through the bus. The memory may include a readable memory and a random access memory.

According to a sixth aspect, this application provides a computer-readable storage medium. The computer-readable storage medium stores instructions. When the instructions are run on a scheduler, the scheduler is enabled to perform the method in any one of the second aspect or the implementations of the second aspect.

According to a seventh aspect, this application provides a computer program product including instructions. When the computer program product runs on a scheduler, the scheduler is enabled to perform the method in any one of the second aspect or the implementations of the second aspect.

In this application, based on the implementations in the foregoing aspects, the implementations may be further combined to provide more implementations.

## BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings.

FIG. 1 is a schematic diagram of an example computing network according to an embodiment of this application;

FIG. 2 is a schematic diagram of another example computing network according to an embodiment of this application;

FIG. 3 is a schematic diagram of still another example computing network according to an embodiment of this application;

FIG. 4A and FIG. 4B are schematic flowcharts of a job scheduling method according to an embodiment of this application;

FIG. 5A and FIG. 5B are schematic flowcharts of another job scheduling method according to an embodiment of this application;

FIG. 6A and FIG. 6B are schematic flowcharts of a network bandwidth adjustment method according to an embodiment of this application;

FIG. 7 is a schematic diagram of a structure of a scheduler according to an embodiment of this application; and

FIG. 8 is a schematic diagram of a structure of a scheduler according to an embodiment of this application.

## DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in this manner are interchangeable in proper circumstances, and this is merely a distinguishing manner used when objects with a same attribute are described in embodiments of this application.

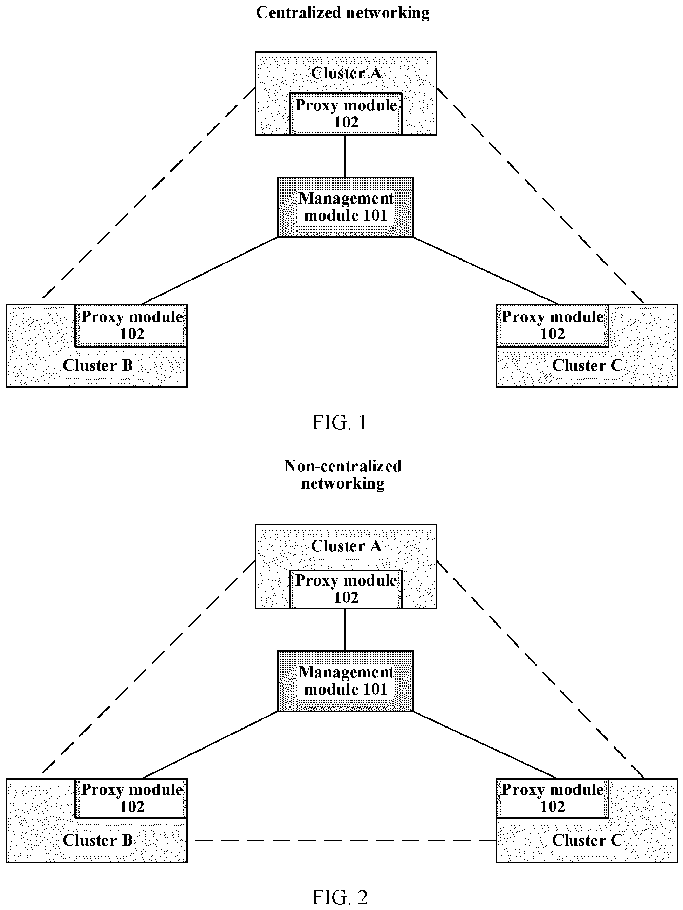

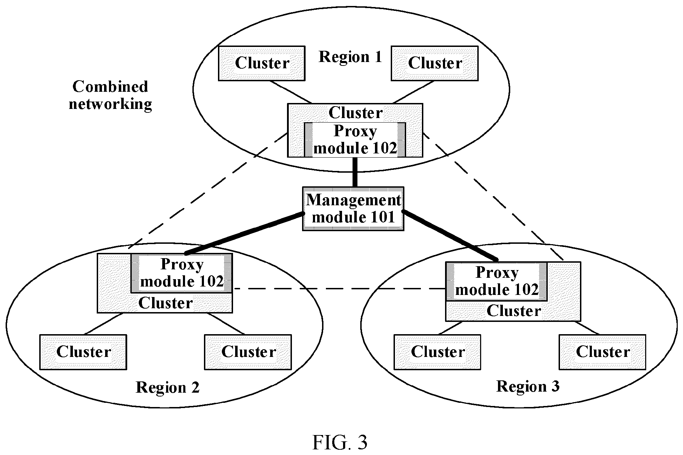

Currently, there may be a plurality of types of organizational relationships between different data centers in a computing network. For example, the organizational relationships include a strong management and control relationship between an upper level and a lower level, a peer (peer) relationship between non-upper and lower levels, or a combination of the strong management and control relationship and the peer relationship. For example, in a computing network 100 shown in FIG. 1, the computing network may be constructed among a plurality of clusters in a centralized networking mode. A cluster A, a cluster B, and a cluster C are in the strong management and control relationship, that is, the cluster A performs strong management and control on the cluster B and the cluster C separately. In a computing network 200 shown in FIG. 2, the computing network may be constructed among a plurality of clusters in a non-centralized networking mode. A cluster X, a cluster Y, and a cluster Z are in the peer relationship. In a computing network 300 shown in FIG. 3, the computing network may be constructed among a plurality of clusters in a networking mode in which the strong management and control relationship and the peer relationship are combined. The computing network includes a plurality of regions (regions). A plurality of clusters in each region are in the strong management and control relationship, and clusters in different regions are in the peer relationship.

In each computing network, a cross-cluster scheduler and a cluster scheduler that is deployed in each cluster are usually used to implement cross-cluster resource scheduling (and data scheduling). For example, resource scheduling is performed in the computing network 100 shown in FIG. 1 (similar to resource scheduling in other types of computing networks). One or more devices may be configured in the cluster B and the cluster C each. In addition, the computing network 100 further includes a scheduler, where the scheduler includes a management module 101 and a plurality of proxy modules 102. A proxy module 102 is deployed in the cluster A to the cluster C each. As shown in FIG. 1, in this case, the management module 101 may be deployed on a computing device in the cluster A, or may be deployed on a computing device independent of each cluster in the computing network 100. However, in another implementation, the management module 101 and the plurality of proxy modules 102 may be deployed on a same computing device, for example, deployed on a computing device independent of each cluster. The computing device is connected to the plurality of clusters, so that the scheduler performs job scheduling for each cluster based on the connection.

When the scheduler receives a job (for example, a job of training an AI model) of a user 201, the management module 101 of the scheduler may schedule the job to the cluster B whose available resources meet a resource required for processing the job (or may schedule the job to the cluster A and the cluster C). Specifically, the job may be first scheduled to the proxy module 102 in the cluster B, and then the proxy module 102 indicates the cluster B to schedule a corresponding resource (for example, including a computing resource, a storage resource, and a network resource) for the job. The cluster B may use an internally configured cluster scheduler to schedule the resource for the job. In addition, data (which is referred to as target data below) required for executing the job may be stored in the cluster C. Therefore, the scheduler may further indicate the cluster C to transmit the target data to the cluster B. Alternatively, the target data may be uploaded by the user 201 to the scheduler, so that the scheduler may deliver the target data to the cluster B. Alternatively, the scheduler may send a storage address, for example, a uniform resource locator (uniform resource locator, URL), of the target data to the cluster B, so that the cluster B may access the cluster C based on the received storage address, to obtain the target data from the cluster C.

In this process, if the cluster B first queues up to schedule the resource for the job and then obtains the target data from the cluster C or the scheduler, time consumed from submission to execution of the job is a sum of waiting duration in which the job queues up in the cluster B for resource allocation and duration in which the target data is transmitted from the cluster C to the cluster B. As a result, waiting duration of a process from submission to execution of the job of the user 201 is long, and consequently, user experience is affected because the job of the user 201 is left unprocessed for long duration.

Based on this, in the scheduler provided in this embodiment of this application, after the management module 101 determines the cluster B for processing the job and delivers the job to the proxy module 102 in the cluster B, the proxy module 102 indicates the target cluster to schedule the resource for the job, and obtain, in a process of scheduling the resource for the job, the target data required for executing the job. In this way, the cluster B concurrently performs a process of obtaining the target data and the process of scheduling the resource for the job, to effectively reduce the waiting duration of the process from submission to execution of the job, so that job processing efficiency is improved, thereby improving user experience. In addition, the resource allocated by the cluster B to the job can be prevented from being in an idle state for long duration, so that a problem of a resource waste can be alleviated.

It should be noted that the foregoing implementation example is described by using an example in which the management module 101 and the proxy modules 102 are deployed in the computing network shown in FIG. 1. In the computing networks shown in FIG. 2 and FIG. 3, corresponding schedulers may also be deployed, so that the schedulers are used to schedule, in the computing networks, jobs to corresponding clusters for execution.

In addition, the foregoing computing networks shown in FIG. 1 to FIG. 3 are merely used as examples for description. The management modules 101 and the proxy modules 102 in the schedulers are deployed at different locations. In another computing network, a management module 101 and proxy modules 102 may be integrated and deployed, for example, integrated and deployed on one computing device, and the computing device is connected to a plurality of clusters by using a wired network or a wireless network. Different proxy modules 102 in a scheduler may be responsible for performing job scheduling on different clusters. Alternatively, in another computing network, different clusters in each region may be in the peer relationship, and different regions may be in the strong management and control relationship. This is not limited in this embodiment.

For ease of understanding, with reference to the accompanying drawings, the following describes in detail a process in which the scheduler performs scheduling for a job of a user.

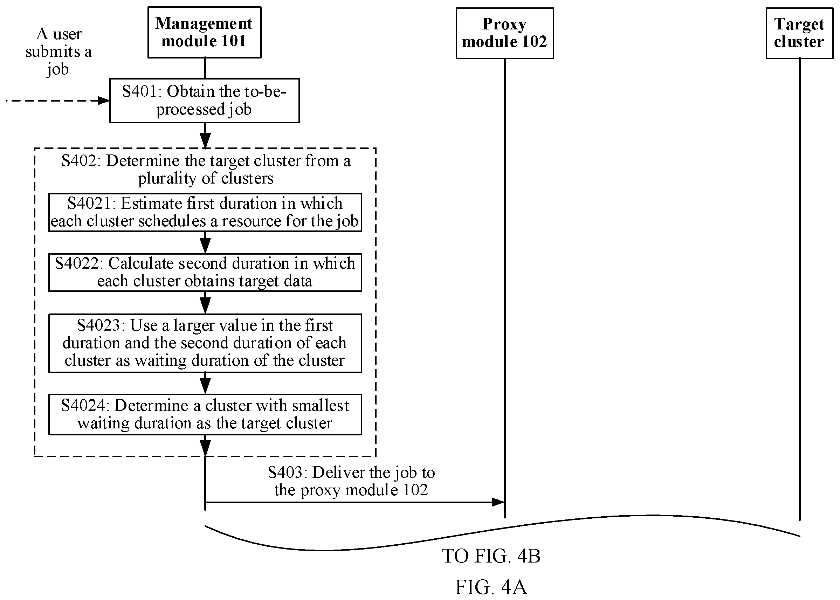

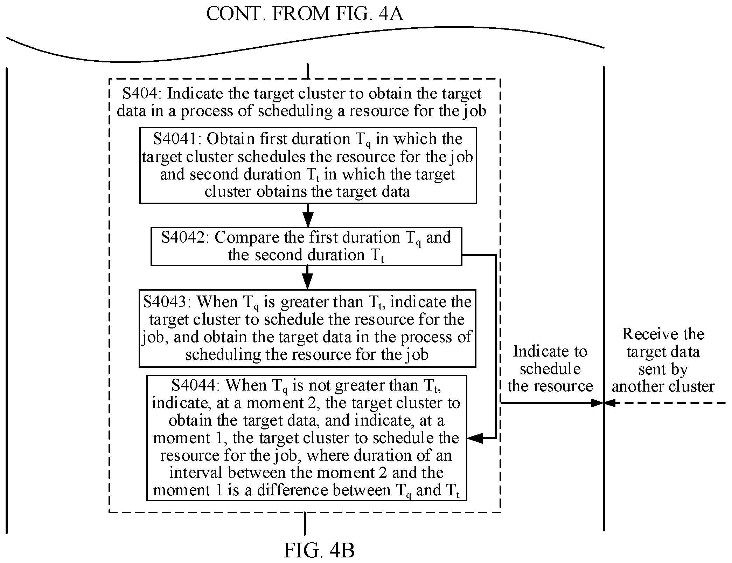

FIG. 4A and FIG. 4B are schematic flowcharts of a job scheduling method according to an embodiment of this application. The method may be applied to the computing networks shown in FIG. 1 to FIG. 3, or may be applied to another computing network. As shown in FIG. 4A and FIG. 4B, the method may specifically include the following steps.

S401: A management module 101 in a scheduler obtains a to-be-processed job.

During actual application, a user may submit the job to a computing network and request the computing network to process the job. For example, the user may remotely log in to the scheduler by using a terminal or a client that is provided by the management module 101 externally, and submit the job on the terminal or the client. The terminal or the client may generate a data processing request, where the data processing request includes the to-be-processed job submitted by the user, so that the terminal or the client may send the data processing request to the management module 101. Correspondingly, the management module 101 may parse the received data processing request to obtain the job submitted by the user. For example, the job submitted by the user may be, for example, an HPC job or an AI model training job. Correspondingly, the computing network receives the job by using the scheduler, and schedules, by using the scheduler, the job to a corresponding cluster in the computing network for processing.

Further, when submitting the job, the user may further specify a resource required for processing the job, including a resource type, a resource specification, and the like. The resource specified by the user may include one or more of a computing resource, a storage resource, and a network resource. The computing resource may be a resource having a computing capability, such as a central processing unit (central processing unit, CPU), a data processing unit (data processing unit, DPU), or an infrastructure processing unit (infrastructure processing unit, IPU). The storage resource may be a resource having a storage capability, such as a cache, a memory, or a storage device. The network resource may be, for example, a network transmission resource such as an uplink bandwidth, a downlink bandwidth, or a network interface card type. Alternatively, the scheduler may automatically determine, based on information such as a job type and a volume of data on which the job depends, the resource required for processing the job. This is not limited in this embodiment.

S402: The management module 101 determines, from a plurality of clusters, a target cluster for processing the job.

In this embodiment, for example, as shown in FIG. 1 to FIG. 3, the computing network may include the plurality of clusters, the management module 101, and a proxy module 102, and each cluster may include a device (such as a computing device) of a data center. During actual application, one cluster may alternatively be constructed based on a plurality of data centers. For example, when a physical distance between two data centers does not exceed a preset range, one cluster may be constructed based on the two data centers. The job submitted to the computing network may be executed by a cluster in the computing network. Therefore, after obtaining the job submitted by the user, the scheduler may determine, from the plurality of clusters, a cluster (which is referred to as a target cluster below for ease of differentiation) for processing the job. For example, this embodiment provides the following several implementations of determining the target cluster.

In a first possible implementation, the management module 101 may determine the target cluster based on a load balancing policy. Specifically, the management module 101 may obtain current load of each cluster, or predict load of the cluster in a future time period (for example, future two seconds), and determine a cluster with smallest load as the target cluster for processing the job submitted by the user.

In a second possible implementation, the management module 101 estimates waiting duration for each of the plurality of clusters to process the job. The waiting duration corresponding to each cluster is determined based on estimated first duration in which the cluster allocates the resource to the job submitted by the user and second duration in which the cluster receives target data on which the job depends. In this way, the management module 101 may determine a cluster with smallest waiting duration in the plurality of clusters as the target cluster that actually processes the job.

Specifically, each cluster may receive a plurality of jobs. As a result, the plurality of jobs usually queue up to wait for the cluster to allocate, to the plurality of jobs, resources required for processing the jobs. Therefore, the first duration in which the cluster schedules the resource for the job submitted by the user is a sum of queuing duration of the job and duration in which the cluster allocates the resource to the job. In this case, as shown in FIG. 4A and FIG. 4B, the management module 101 may perform step S4021. Specifically, the management module 101 estimates, based on time consumed by each cluster to schedule a resource for a job (which is referred to as a historical job below) in a past time period, the first duration in which the cluster schedules the resource for the job submitted by the user.

In addition, the target data (for example, a training sample on which the AI model training job depends) on which execution of the job depends may be stored only in a part of the clusters in the computing network. As a result, when the cluster for processing the job does not store the target data, the target data usually needs to be obtained from another cluster. The another cluster may be, for example, a cluster that is closest to the cluster and that stores the target data. Alternatively, when submitting the job, the user further uploads, to the management module 101, the target data required for executing the job, so that the management module 101 may send, to the cluster, the target data uploaded by the user. Alternatively, the management module 101 may send, to the cluster, a storage address of the target data in the computing network, so that the cluster may obtain the target data from the computing network based on the storage address. In this case, as shown in FIG. 4A and FIG. 4B, the management module 101 may perform step S4022. Specifically, the management module 101 calculates the second duration in which each cluster obtains the target data. The second duration may be, for example, a ratio of a data volume of the target data to a transmission bandwidth. It may be understood that, for a cluster that stores the target data, second duration corresponding to the cluster is 0, in other words, a data transmission process may be skipped. In a process of calculating the second duration, if there is another job currently performing data transmission in a cluster, second duration corresponding to the cluster is a sum of time consumed to transmit the target data between two clusters and time consumed by the job of the user to queue up to wait for the data transmission in the cluster.

Then, the management module 101 may perform step S4023 and step S4024, to determine the target cluster. Specifically, for each cluster, the management module 101 may compare the first duration and the second duration that correspond to the cluster, and determine a larger value in the first duration and the second duration as duration in which the job needs to wait for being processed when being delivered to the cluster, namely, the foregoing waiting duration. In this way, the management module 101 may determine, from the plurality of clusters based on the waiting duration corresponding to each cluster, the target cluster with the smallest job waiting duration. For example, the management module 101 may sort the waiting duration corresponding to each cluster in ascending order, and determine waiting duration with a smallest value, so that a cluster corresponding to the waiting duration with the smallest value may be determined as the target cluster.

During actual application, because remaining available resources in a part of the clusters in the computing network may not meet a resource condition required for executing the job. For example, a resource type or a resource quantity of the remaining available resources does not meet the resource condition. Therefore, in a process of determining the target cluster, the management module 101 may first filter out a cluster that is in the computing network and whose remaining available resource does not meet the resource condition, and further determine the target cluster from a plurality of clusters obtained through filtration. In this way, a quantity of calculation required by the management module 101 to determine the target cluster can be reduced.

For example, in the process of determining the target cluster based on the second implementation, when estimating the first duration in which each cluster allocates the resource to the job submitted by the user, the management module 101 may determine the target cluster based on duration in which the cluster allocates the resource to the historical job in the past time period (for example, a past month).

During specific implementation, the management module 101 may classify jobs in the computing network into a plurality of categories in advance. For example, the management module 101 may classify the jobs based on one or more of the following information corresponding to the jobs: a category of a requested resource, a quantity of requested resources, a volume of data on which the job depends, an application to which the job belongs, a job priority, a job owner (for example, a user or a tenant to which the job belongs), a queue in which the job is located, and a calculation instance to which the job belongs. During actual application, categories to which the jobs in the computing network belong may be preconfigured in the management module 101 by a skilled person. In this way, for each of the plurality of clusters, the management module 101 may calculate average duration in which the cluster schedules resources for a plurality of historical jobs of each category in the past time period (where if a quantity of historical jobs of a category is one, the average duration is duration in which the cluster schedules a resource for the historical job). In this way, the management module 101 may calculate the average duration in which each cluster schedules the resource for the historical job of each category.

In addition, for each of the plurality of clusters, the management module 101 further obtains a currently available resource ratio and a historically available resource ratio of the historical job of each category in the cluster. The currently available resource ratio is a ratio of a resource quantity of currently available resources of the cluster to a resource quantity of total resources of the cluster. For example, when the available resource includes one resource, for example, includes a computing resource, the currently available resource ratio may be specifically a ratio of a quantity of available processors (or processor cores) in the cluster to a total quantity of processors (or a total quantity of processor cores). When the available resource includes a plurality of types of resources, for example, includes a computing resource, a storage resource, and a network resource, the currently available resource ratio may be obtained by performing weighted summation based on a ratio of a resource quantity of available resources of each type to a resource quantity of total resources of the type, or may be obtained through calculation in another manner. This is not limited in this embodiment.

The historically available resource ratio is a ratio of an average value (which is referred to as an average quantity of available resources below) of resource quantities of available resources to the resource quantity of total resources of the cluster when the cluster allocates resources to the plurality of historical jobs of each category in a time period before the cluster schedules the resource for the job submitted by the user. For example, the management module 101 may count resource quantities of available resources when the cluster allocates resources to the historical job respectively at a plurality of moments in the past time period, and then the management module 101 may calculate the average resource quantity of available resources based on the resource quantities of available resources corresponding to the plurality of moments, to further calculate the ratio of the average resource quantity of available resources to the resource quantity of total resources of the cluster. In another embodiment, the historically available resource ratio may alternatively be a ratio of a resource quantity of available resources to the resource quantity of total resources of the cluster when the cluster allocates resources to the plurality of historical jobs of each category at a moment before the cluster schedules the resource for the job submitted by the user. This is not limited in this embodiment.

During actual application, the management module 101 may calculate, based on resource usage of each cluster, a currently available resource ratio and a historically available resource ratio that correspond to each category of historical job in each cluster.

In this way, after receiving the job submitted by the user, for each cluster, the management module 101 may determine, based on a target category to which the job belongs, average duration in which the cluster schedules a resource for a historical job of the target category, to estimate, based on the average duration corresponding to the historical job of the target category, the currently available resource ratio, and the historically available resource ratio, the first duration in which the cluster queues up, for the job submitted by the user, to wait for resource allocation. In this way, the first duration in which each cluster schedules the resource for the job submitted by the user may be obtained through estimation. In an example, the management module 101 may calculate the first duration by using the following formula (1):

$$Tq = Tq_x * \frac{\text{RP}_x}{\text{RP}_{current}} \quad (1),$$

where

Tq is the estimated first duration in which the cluster schedules the resource for the job submitted by the user; $Tq_x$ is the average duration in which the cluster allocates the resource to the historical job of the target category; $\text{RP}_x$ is the historically available resource ratio; and $\text{RP}_{current}$ is the currently available resource ratio. Based on the foregoing similar process, the management module 101 may determine corresponding first duration in which each cluster schedules a resource for each category of job.

It should be noted that the foregoing implementation of estimating the first duration in which the target cluster schedules the resource for the job is merely used as an example for description. In another embodiment, the management module 101 may alternatively estimate the first duration in another manner. For example, after determining duration in which the target cluster allocates resources to a plurality of historical jobs in a past time period. the scheduler may estimate, based on a median of the duration corresponding to the plurality of historical jobs, the foregoing currently available resource ratio, and the foregoing historically available resource ratio, the first duration in which the target cluster schedules the resource for the job. During actual application, whether the management module 101 selects, based on the duration corresponding to the plurality of historical jobs, the median or the average value to calculate the first duration may be determined based on configuration that is set by a skilled person in advance and that is of the management module 101.

S403: The management module 101 delivers the job to a proxy module 102 corresponding to the target cluster.

For example, after determining the target cluster, the management module 101 may send an execution instruction to the proxy module 102 corresponding to the target cluster, where the execution instruction includes the job submitted by the user, to instruct the proxy module 102 to control the target cluster to execute the job.

During actual application, when the target cluster does not store the target data required for executing the job, the management module 101 may further send the target data to the target cluster. For example, the target data may be uploaded by the user, so that the management module 101 delivers both the job and the target data to the target cluster after determining the target cluster. Alternatively, the target data may be stored in another cluster in the computing network. In this case, the management module 101 may indicate the target cluster to request the target data from the another cluster that stores the target data. Alternatively, the management module 101 may send a data sharing request to the another cluster, to indicate the another cluster to share the target data with the target cluster. In this embodiment, a specific implementation in which the target cluster obtains the target data from the management module 101 or the another cluster is not limited.

S404: The proxy module 102 indicates the target cluster to schedule the resource for the job, and obtain the target data in a process of scheduling the resource for the job, where the target data is the data required for executing the job.

If the target cluster serially performs a process of obtaining the target data and the process of scheduling the resource for the job, a process from submission to execution of the job consumes excessively long time, and consequently, processing efficiency of job execution is affected. Therefore, in this embodiment, the proxy module 102 may indicate the target cluster to obtain the target data in the process of scheduling the resource for the job. In this way, the target cluster may implement accelerated job processing by concurrently performing the process of obtaining the target data and the process of scheduling the resource for the job. When the management module 101 and the proxy module 102 are deployed on a same computing device, after the management module 101 delivers the job to the proxy module 102, the proxy module 102 may send the job to a cluster scheduler of the target cluster, to trigger the cluster scheduler to schedule the resource for the job. When the proxy module 102 is deployed in the target cluster, after the management module 101 delivers the job to the proxy module 102, the proxy module 102 may trigger a cluster scheduler of the target cluster to schedule the resource for the job.

During specific implementation, as shown in FIG. 4A and FIG. 4B, the proxy module 102 may perform step S4041. Specifically, the proxy module 102 receives the estimated first duration Tq in which the target cluster schedules the resource for the job and the second duration Tt in which the target cluster obtains the target data, where the first duration and the second duration are sent by the management module 101. For example, when the management module 101 determines the target cluster based on first duration and second duration that correspond to each cluster, after determining the target cluster, the management module 101 may send the calculated first duration Tq and second duration Tt that correspond to the target cluster to the proxy module 102 corresponding to the target cluster.

Then, the proxy module 102 may perform step S4042, step S4043, and step S4044. Specifically, the proxy module 102 compares the first duration Tq and the second duration Tt. In addition, when the first duration Tq is greater than the second duration Tt, the proxy module 102 indicates the target cluster to obtain the target data in the process of scheduling the resource for the job. During specific implementation, the proxy module 102 may submit the job to the cluster scheduler inside the target cluster, to trigger the cluster scheduler to start to allocate a resource in the target cluster to the job. In addition, the proxy module 102 may indicate the target cluster to obtain the target data, for example, to receive the target data sent by the management module 101 or the another cluster. In this way, in the process of scheduling the resource for the job, the target cluster simultaneously performs an operation of obtaining the target data, to implement concurrent processing of resource scheduling and data obtaining, so as to improve job processing efficiency.

When waiting duration Tq is not greater than the second duration Tt, the proxy module 102 may calculate a difference between the first duration Tq and the second duration Tt, and determine, based on the difference, a moment 1 of triggering the target cluster to schedule the resource for the job and a moment 2 of indicating the target cluster to obtain the target data. The moment 2 is earlier than the moment 1, and duration of an interval between the moment 2 and the moment 1 is the difference. Then, the proxy module 102 may indicate, at the moment 2, the target cluster to start to obtain the target data. In addition, in a process in which the target cluster receives the target data, the proxy module 102 indicates, at the moment 1, the target cluster to schedule the resource for the job. In this way, in the process of scheduling the resource for the job, the target cluster simultaneously performs an operation of obtaining the target data, to implement concurrent processing of resource scheduling and data obtaining, so as to improve job processing efficiency. In addition, the target cluster first starts to perform the process of obtaining the target data, and then starts to schedule the resource for the job when a time period passes after the target data is received. In this way, a moment at which the target cluster completes data obtaining and a moment at which the target cluster completes resource scheduling is close, so that a resource waste caused because the target cluster is in a waiting state after scheduling the resource for the job can be avoided.

It should be noted that, in the foregoing implementation, an example in which the management module 101 calculates the first duration Tq and the second duration Tt, and sends the first duration Tq and the second duration Tt to the proxy module 102 is used for description. In another embodiment, the proxy module 102 may perform a process of estimating the first duration Tq in which the target cluster schedules the resource for the job and calculating the second duration Tt in which the target cluster obtains the target data. For example, when the management module 101 determines the target cluster based on current load of each cluster (where the management module 101 does not calculate the first duration and the second duration that correspond to each cluster), after receiving the job delivered by the management module 101, the proxy module 102 may estimate the first duration Tq in which the target cluster schedules the resource for the job and the second duration Tt in which the target cluster obtains the target data. For a specific implementation process, refer to the foregoing related descriptions. Details are not described herein again.

In this embodiment, the proxy module 102 indicates the target cluster to concurrently perform the process of obtaining the target data and the process of scheduling the resource for the job, to effectively reduce waiting duration of a process from submission to execution of the job, so that the job processing efficiency is improved, thereby improving user experience.

In the embodiment shown in FIG. 4A and FIG. 4B, a process in which the scheduler determines the target cluster and indicates the target cluster to concurrently obtain the data and schedule the resource for the user job is mainly described. In another possible embodiment, because the first duration Tq, estimated by the management module 101, in which the target cluster schedules the resource for the job may be greatly different from duration in which the target cluster actually schedules the resource for the job, for example, a part of jobs that queue up in the target cluster to wait for resource allocation may be suspended, or the target cluster preferentially schedules a resource for a job with a higher priority, time consumed by the target cluster to actually schedule the resource for the job submitted by the user may be decreased, or may be increased. In this case, the scheduler may adjust a network bandwidth used by the target cluster to receive the target data, to synchronously adjust time consumed by the target cluster to receive the target data.

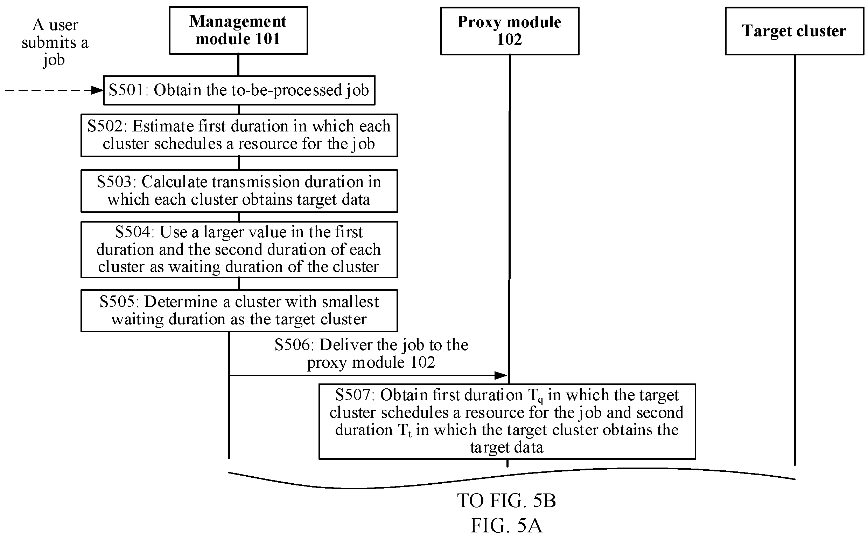

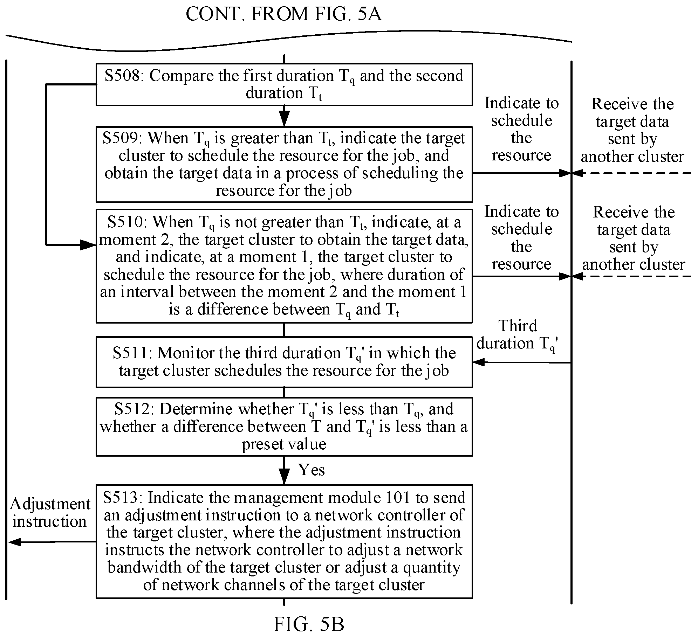

The following describes in detail, with reference to FIG. 5A and FIG. 5B, a specific implementation process in which the scheduler adjusts the network bandwidth of the target cluster.

FIG. 5A and FIG. 5B are schematic flowcharts of another job scheduling method according to an embodiment of this application. As shown in FIG. 5A and FIG. 5B, the method may specifically include the following steps.

S501: A management module 101 obtains a to-be-processed target job.

S502: The management module 101 estimates first duration in which each cluster in a computing network schedules a resource for the job submitted by a user.

S503: The management module 101 calculates second duration in which each cluster obtains target data.

S504: The management module 101 uses a larger value in the first duration and the second duration that correspond to each cluster as waiting duration for the cluster to process the job.

S505: The management module 101 uses a cluster with smallest waiting duration in the plurality of clusters as a target cluster.

For a specific implementation process of step S501 to step S505, refer to related descriptions of step S401 and step S402 in the embodiment shown in FIG. 4A and FIG. 4B. Details are not described in this embodiment again.

S506: The management module 101 delivers the job to a proxy module 102 corresponding to the target cluster.

S507: The proxy module 102 obtains first duration Tq in which the target cluster schedules the resource for the job, and second duration Tt in which the target cluster obtains the target data.

In a first implementation example, because the management module 101 calculates the first duration and the second duration that correspond to each cluster in a process of performing step S502 and step S503, the management module 101 may deliver (for example, delivered with the job) the first duration Tq and the second duration Tt that correspond to the target cluster to the proxy module 102.

In a second implementation example, the proxy module 102 may calculate the first duration Tq in which the target cluster schedules the resource for the job and the second duration Tt in which the target cluster obtains the target data. For a specific implementation process in which the proxy module 102 obtains the first duration Tq and the second duration Tt through calculation, refer to related descriptions that the management module 101 calculates the first duration and the second duration that correspond to each cluster in the foregoing embodiment. Details are not described herein again.

S508: The proxy module 102 compares the first duration Tq and the second duration Tt. In addition, when the first duration Tq is greater than the second duration Tt, step S509 continues to be performed. When the first duration Tq is not greater than the second duration Tt, step S510 continues to be performed.

S509: The proxy module 102 indicates the target cluster to schedule the resource for the job, and obtain the target data in a process of scheduling the resource for the job.

S510: The proxy module 102 indicates, at a moment 2, the target cluster to start to obtain the target data, and the proxy module 102 indicates, at a moment 1, the target cluster to schedule the resource for the job. The moment 2 is earlier than the moment 1, and duration of an interval between the moment 2 and the moment 1 is a difference between the first duration Tq and the second duration Tt.

S511: The proxy module 102 monitors third duration Tq' in which the target cluster schedules the resource for the job.

S512: Determine whether a difference between the first duration Tq and the third duration Tq' is less than a preset value, and if the difference is less than the preset value, step S513 continues to be performed. If the difference is greater than or equal to the preset value, no processing is performed.

S513: The proxy module 102 indicates the management module 101 to send an adjustment instruction to a network controller of the target cluster, where the adjustment instruction instructs the network controller to adjust a network bandwidth of the target cluster or adjust a quantity of network channels of the target cluster.

In this embodiment, when there is a large difference between the estimated first duration Tq in which the target cluster schedules the resource for the job and the third duration Tq' in which the target cluster actually schedules the resource for the job, the scheduler may adjust the network bandwidth used by the target cluster to receive the target data, to synchronously adjust time consumed by the target cluster to receive the target data, so that the target cluster can end resource scheduling and obtaining of the target data at a same moment or close moments.

Specifically, the proxy module 102 may monitor, in real time, the third duration Tq' in which the target cluster schedules the resource for the job submitted by the user. In addition, when there is a large difference between the third duration Tq' and the estimated first duration Tq (which may be specifically that the difference between the first duration Tq and the third duration Tq' is greater than the preset value), it indicates that time consumed by the target cluster to schedule the resource for the job is greatly reduced in comparison with estimated time consumption. In this case, if the target data is received based on the current bandwidth of the target cluster, after the target cluster schedules the resource for the job, the target cluster may start to execute the job only after the target cluster completes receiving of the target data. As a result, a resource waste is caused because the scheduled job is in an idle state for long duration.

Therefore, in this embodiment, the network bandwidth of the target cluster may be increased. During specific implementation, the proxy module 102 may send a bandwidth adjustment request to the management module 101 based on the difference between the first duration Tq and the third duration Tq'. Correspondingly, the management module 101 may send the adjustment instruction to the network controller, to request the network controller to increase the network bandwidth of the target cluster (in other words, increase a network bandwidth of an existing network channel for transmitting data), or add a network channel for the target cluster, where the added network channel is used to increase a speed at which the target cluster receives the target data. In this way, the second duration Tt in which the target cluster receives the target data may be reduced because of an increase in the network bandwidth, so that the target cluster has completed receiving of the target data when completing the resource scheduling, to avoid a problem of a resource waste.

In a possible implementation, in a process of increasing the network bandwidth of the target cluster, the network controller may first increase the network bandwidth of the existing network channel of the target cluster. In addition, if the current network bandwidth of the target cluster meets a requirement before the bandwidth of the existing network channel is adjusted to an upper limit, the network controller may end this bandwidth adjustment, and may not create a new network channel for the target cluster. When the bandwidth of the existing network channel is adjusted to the upper limit, the current network bandwidth of the target cluster still does not reach a network bandwidth requested by the management module 101. In this case, the network controller may create a new network channel for the target cluster, and allocate the new network channel to the target cluster, to increase the network bandwidth of the target cluster, so that the target cluster accelerates, based on the existing network channel and the newly created network channel, the receiving of the target data. In another possible implementation, the network controller may alternatively create a new network channel for the target cluster directly, and when the quantity of network channels reaches an upper limit, the network controller further increases a network bandwidth of each network channel, or the like. In this embodiment, a specific implementation in which the network controller increases the network bandwidth for the target cluster is not limited.

Further, after the target cluster completes the receiving of the target data, if the target cluster currently does not have another data transmission task, or the another data transmission task in the target cluster has a low network bandwidth requirement, the proxy module 102 may further indicate the management module 101 to request the network controller to decrease the network bandwidth of the target cluster. In this way, a waste of a bandwidth resource in the computing network can be reduced.

In addition, when the third duration Tq' is greater than the estimated first duration Tq, and the difference between the third duration Tq' and the first duration Tq is greater than the preset value, it indicates that the time consumed by the target cluster to schedule the resource for the job is long (which exceeds the estimated first duration Tq). In this case, the proxy module 102 may indicate the management module 101 to request the network controller to decrease the network bandwidth used by the target cluster to receive the target data, or decrease the quantity of network channels of the target cluster. Correspondingly, time consumed by the target cluster to receive the target data increases correspondingly. In this way, after scheduling the resource for the job, the target cluster can further complete, at a close moment, the receiving of the target data, so that bandwidth resource consumption in the computing network can be reduced by decreasing the network bandwidth of the target cluster under a condition that the resource allocated by the target cluster to the job is not idle.

In this embodiment, the network bandwidth of the target cluster is flexibly adjusted, so that a waste of a network resource can be reduced and job processing efficiency is improved.

In the foregoing embodiment shown in FIG. 5A and FIG. 5B, that the scheduler dynamically adjusts the network bandwidth of the target cluster for a single job is mainly introduced. In another embodiment, a plurality of jobs may be submitted to the target cluster, and different jobs may have different requirements on the network bandwidth of the target cluster. In this case, the scheduler may take comprehensive consideration based on network bandwidth requirements of the plurality of jobs, to determine a network bandwidth that the network controller is requested to allocate to the target cluster. The following describes in detail a process in which the scheduler adjusts the network bandwidth of the target cluster for a target job in the plurality of jobs.

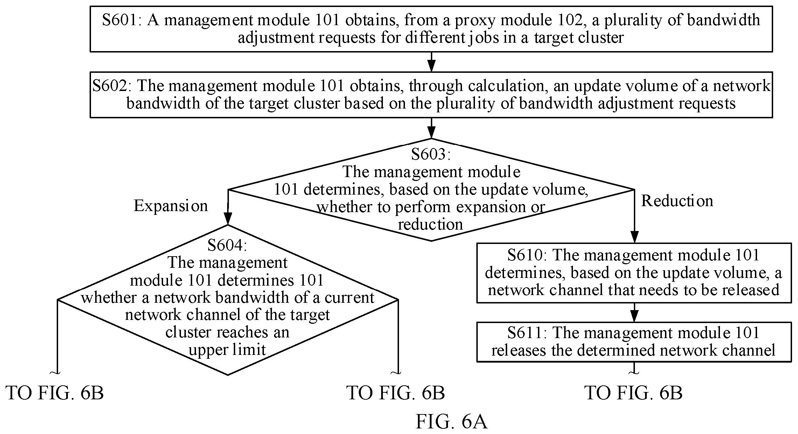

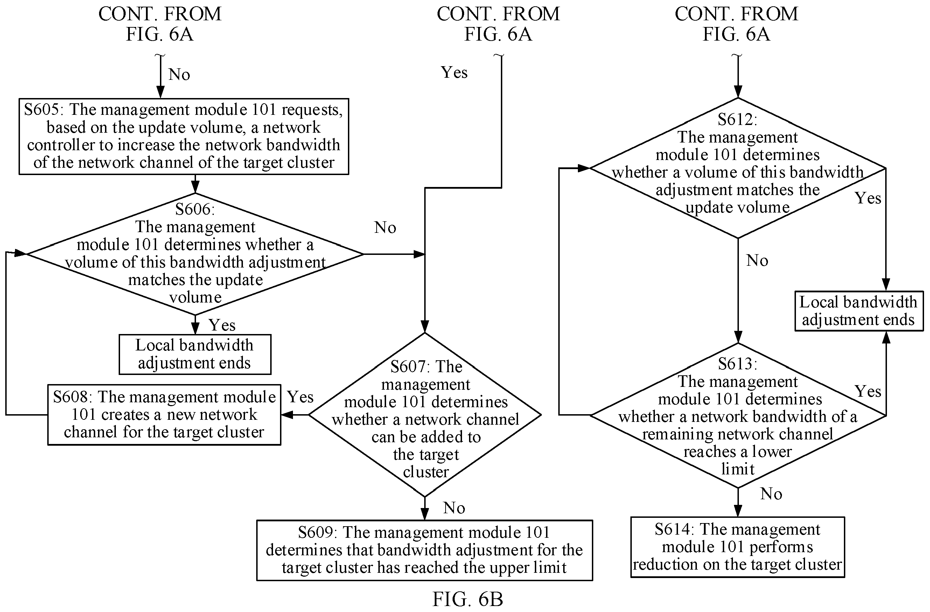

FIG. 6A and FIG. 6B are schematic flowcharts of a network bandwidth adjustment method. The method may specifically include the following steps.

S601: A management module 101 obtains a plurality of bandwidth adjustment requests that are sent by a proxy module 102 and that are for different jobs in a target cluster, where each bandwidth adjustment request includes indication information for adjusting a bandwidth of the target cluster.

In this embodiment, there may be a plurality of jobs in the target cluster, and the target cluster may concurrently perform a data transmission process for the plurality of jobs, to simultaneously receive data separately required for executing the plurality of jobs. In an actual application scenario, data volumes of data required for executing the different jobs are different. As a result, different jobs may have different requirements on the network bandwidth of the target cluster. For example, a volume of data required for executing a job A is 10 megabytes (MB), and the network bandwidth of the target cluster may be required to be decreased to reduce a waste of a bandwidth resource. However, a volume of data required for executing a job B is 1 gigabyte (GB) or the like, and the network bandwidth of the target cluster may be required to be increased to reduce time consumed for data transmission in the target cluster. For another example, after data transmission is completed, a job P may require the network bandwidth of the target cluster to be decreased to reduce a waste of a bandwidth resource. However, before data transmission is performed, a job Q may require the network bandwidth of the target cluster to be increased to reduce time consumed for the data transmission in the target cluster.

The indication information that is for adjusting the bandwidth of the target cluster and that is carried in the bandwidth adjustment request may be, for example, a positive value or a negative value. In addition, when the indication information is the positive value, it indicates to increase the bandwidth of the target cluster, and a bandwidth increase amplitude is the positive value. When the indication information is the negative value, it indicates to decrease the bandwidth of the target cluster, and a bandwidth decrease amplitude is an absolute value of the negative value. In another embodiment, the indication information in the bandwidth adjustment request may alternatively be implemented by adjusting a direction and a size, and indicate to increase the bandwidth of the target cluster.

In an implementation example, the proxy module 102 in the target cluster may respectively generate the plurality of different bandwidth adjustment requests for the different jobs, and send the plurality of bandwidth adjustment requests to the management module 101, so that the management module 101 requests the network controller to perform corresponding adjustment on the network bandwidth of the target cluster.

S602: The management module 101 obtains, through calculation, an update volume of the network bandwidth of the target cluster based on the plurality of bandwidth adjustment requests.

During specific implementation, the management module 101 may classify, based on the indication information that is included in the plurality of bandwidth adjustment requests and that is for adjusting the bandwidth of the target cluster, the plurality of bandwidth adjustment requests into a bandwidth expansion category and a bandwidth reduction category; calculate a total expansion value of the bandwidth of the target cluster based on one or more bandwidth adjustment requests of the bandwidth expansion category; and calculate a total reduction value of the bandwidth of the target cluster based on one or more bandwidth adjustment requests of the bandwidth reduction category, so that the management module 101 may calculate a difference between the total expansion value and the total reduction value. The difference is the update volume of the network bandwidth of the target cluster. In addition, when the difference is greater than 0, the management module 101 determines to increase the network bandwidth of the target cluster, and a bandwidth increase volume is the difference. When the difference is less than 0, the management module 101 determines to decrease the network bandwidth of the target cluster, and a bandwidth decrease volume is an absolute value of the difference.

During actual application, the management module 101 may receive a plurality of bandwidth adjustment requests for a same job. For example, when there is a delay or another exception in a communication network between the proxy module 102 and the management module 101, the proxy module 102 may repeatedly send a plurality of bandwidth adjustment requests to the management module 101, to ensure that the management module 101 can receive the bandwidth adjustment request sent by the proxy module 102. Therefore, after obtaining the plurality of bandwidth adjustment requests, the management module 101 may first filter the plurality of bandwidth adjustment requests, to filter out a repeated bandwidth adjustment request for a same job, and then obtain the update volume of the network bandwidth of the target cluster based on a remaining bandwidth adjustment request.

In addition, because the management module 101 is usually responsible for job scheduling within an entire computing network, the management module 101 may receive bandwidth adjustment requests for jobs in different clusters. Therefore, the management module 101 may further classify, based on the clusters, the plurality of obtained bandwidth adjustment requests, and determine one or more bandwidth adjustment requests that belong to each cluster, to adjust the network bandwidth of the target cluster based on a bandwidth adjustment request that belongs to the target cluster.

Then, the management module 101 may adjust the network bandwidth of the target cluster based on the calculated update volume. Specifically, this embodiment may further include the following steps.

S603: The management module 101 determines, based on the update volume, whether to perform expansion or reduction on the network bandwidth of the target cluster. In addition, when expansion is required on the network bandwidth of the target cluster, step S604 is performed. When reduction is performed on the network bandwidth of the target cluster, step S610 is performed.

S604: The management module 101 determines whether a network bandwidth of a current network channel of the target cluster reaches an upper limit. If the network bandwidth of the current network channel of the target cluster reaches the upper limit, step S607 is performed. If the network bandwidth of the current network channel of the target cluster does not reach the upper limit, step S605 continues to be performed.

S605: The management module 101 requests, based on the update volume, the network controller to increase the network bandwidth of the current network channel of the target cluster.

S606: The management module 101 determines whether a volume of this bandwidth adjustment matches the update volume. If the volume of the bandwidth adjustment matches the update volume, this bandwidth adjustment ends. If the volume of the bandwidth adjustment does not match the update volume, step S607 continues to be performed.

In some scenarios, the network bandwidth of one or more current network channels of the target cluster may not reach the upper limit. However, after the network channel is expanded to the upper limit, a total expansion volume of the bandwidth of the target cluster may still be less than the update volume. In this case, it is difficult to meet a network bandwidth adjustment objective of the target cluster based on the existing network channel. Therefore, step S607 may continue to be performed to expand a remaining part of the network bandwidth of the target cluster.

S607: The management module 101 requests the network controller to determine whether a network channel can be added to the target cluster. If the network channel can be added to the target cluster, step S608 continues to be performed. If the network channel cannot be added to the target cluster, step S609 is performed.

S608: The management module 101 requests the network controller to create a new network channel for the target cluster, and returns to perform step S606.

S609: The management module 101 determines that the network bandwidth for the target cluster has been adjusted to the upper limit.

During actual application, the management module 101 may notify the proxy module 102 deployed in the target cluster that the network bandwidth of the target cluster has been adjusted to a maximum value, and the bandwidth of the target cluster network cannot be further expanded.

S610: The management module 101 determines, based on the update volume, a network channel that needs to be released.

For example, it is assumed that the target cluster currently includes a network channel 1, a network channel 2, and a network channel 3, network bandwidths of the network channel 1, the network channel 2, and the network channel 3 are respectively 100 megabits per second (Mbps), 200 Mbps and 500 Mbps, and the update volume is (to decrease by) 100 Mbps. In this case, the scheduler may determine to release the network channel 1, to decrease the network bandwidth of the target cluster by 100 Mbps.

S611: The management module 101 requests the network controller to release the determined network channel.

S612: The management module 101 determines whether a volume of this bandwidth adjustment matches the update volume. If the volume of the bandwidth adjustment matches the update volume, this bandwidth adjustment ends. If the volume of the bandwidth adjustment does not match the update volume, step S613 continues to be performed.

S613: The management module 101 determines whether a network bandwidth of a remaining network channel of the target cluster reaches a lower limit. If the network bandwidth of the remaining network channel of the target cluster reaches the lower limit, this network bandwidth adjustment ends. If the network bandwidth of the remaining network channel of the target cluster does not reach the lower limit, step S614 continues to be performed.

When the network bandwidth of the remaining network channel of the target cluster reaches the lower limit, it indicates that the network channel of the target cluster has reached the lower limit for releasing, and a bandwidth of each remaining network channel reaches the lower limit.

S614: The management module 101 requests the network controller to perform reduction on the target cluster, to implement reduction on the remaining part of the network bandwidth of the target cluster.

For example, it is assumed that the target cluster currently includes a network channel 1, a network channel 2, and a network channel 3, bandwidths of the network channel 1, the network channel 2, and the network channel 3 are respectively 100 megabits per second (Mbps), 200 Mbps and 500 Mbps, and the update volume is assumed to be 180 Mbps. In this case, after the network channel 1 is released, a reduction quantity of the network bandwidth of the target cluster is only 100 Mbps, and does not reach 180 Mbps. Therefore, the scheduler may request the network controller to continue to perform reduction on the target cluster. For example, the network bandwidth of the network channel 2 is reduced from 200 Mbps to 120 Mbps. Alternatively, the network bandwidth of the network channel 3 is reduced from 500 Mbps to 420 Mbps. In this way, a total reduction quantity of the network bandwidth of the target cluster reaches 180 Mbps.

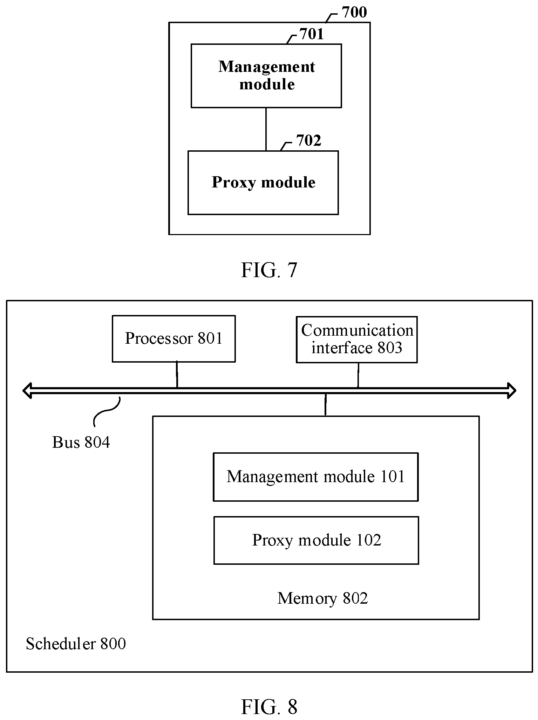

The foregoing describes in detail the job scheduling method provided in this application with reference to FIG. 1 to FIG. 6A and FIG. 6B. The following describes a scheduler provided in this application with reference to FIG. 7 and FIG. 8.

FIG. 7 is a schematic diagram of a structure of a scheduler according to an embodiment of this application. As shown in FIG. 7, a scheduler 700 is configured to manage a plurality of clusters, and includes a management module 701 and a proxy module 702. The management module 701 and the proxy module 702 may be configured to implement the methods performed by the management module 101 and the proxy module 102 in embodiments shown in FIG. 4A and FIG. 4B to FIG. 6A and FIG. 6B.

Specifically, the management module 701 is configured to:

    obtain a to-be-processed job;
    determine, from the plurality of clusters, a target cluster for processing the job; and
deliver the job to the proxy module 702.

The proxy module 702 is configured to indicate the target cluster to schedule a resource for the job, and obtain target data in a process of scheduling the resource for the job, where the target data is data required for executing the job.

In a possible implementation, when determining, from the plurality of clusters, the target cluster for processing the job, the management module 701 is specifically configured to:

estimate first duration in which each of the plurality of clusters schedules a resource for the job;
calculate second duration in which each of the plurality of clusters obtains the target data;
use a larger value in the first duration and the second duration as waiting duration for the cluster to process the job; and
use a cluster with smallest waiting duration in the plurality of clusters as the target cluster.

Optionally, the management module 701 may alternatively schedule, based on load of each cluster, the job to a cluster with smallest load for processing, to implement load balancing in a computing network.

In a possible implementation, the management module 701 is further configured to:

estimate first duration in which the target cluster schedules the resource for the job;
calculate second duration in which the target cluster obtains the target data; and
send the first duration and the second duration to the proxy module 702.

When indicating the target cluster to schedule the resource for the job, and obtain the target data in the process of scheduling the resource for the job, the proxy module 702 is specifically configured to:
when the first duration is greater than the second duration, indicate the target cluster to schedule the resource for the job, and obtain the target data in the process of scheduling the resource for the job.

Optionally, after the management module 701 delivers the job to the proxy module 702, the proxy module 702 may alternatively estimate first duration in which the target cluster schedules the resource for the job, and calculate second duration in which the target cluster obtains the target data, to indicate, based on the first duration and the second duration, the target cluster to obtain the target data in the process of scheduling the resource for the job.

In a possible implementation, the management module 701 is further configured to:

estimate first duration in which the target cluster schedules the resource for the job;
calculate second duration in which the target cluster obtains the target data; and
send the first duration and the second duration to the proxy module 702.

When indicating the target cluster to schedule the resource for the job, and obtain the target data in the process of scheduling the resource for the job, the proxy module 702 is specifically configured to:
when the first duration is not greater than the second duration, indicate, at a first moment before indicating the target cluster to schedule the resource for the job, the target cluster to start to obtain the target data, and indicate, at a second moment, the target cluster to schedule the resource for the job, where duration of an interval between the first moment and the second moment is the second duration minus the first duration.

In a possible implementation, when estimating the first duration in which the target cluster schedules the resource for the job, the management module 701 is specifically configured to:

determine a target category to which the job belongs;
calculate average duration in which the target cluster schedules a resource for a historical job of the target category;
obtain a currently available resource ratio and a historically available resource ratio that are of the target cluster, where the currently available resource ratio is a ratio of a resource quantity of currently available resources of the target cluster to a resource quantity of total resources, and the historically available resource ratio is a ratio of an average resource quantity of available resources of the target cluster in a time period before the target cluster schedules the resource for the job to the resource quantity of total resources; and
estimate, based on the average duration, the currently available resource ratio, and the historically available resource ratio, the first duration in which the target cluster schedules the resource for the job.

In a possible implementation, the target category is determined based on one or more of a category of a requested resource, a quantity of requested resources, a volume of data on which the job depends, an application to which the job belongs, a job priority, a queue in which the job is located, and a calculation instance to which the job belongs.

In a possible implementation, the proxy module 702 is further configured to:
monitor third duration in which the target cluster schedules the resource for the job, and indicate, based on the third duration and the first duration, the management module 701 to send an adjustment instruction to a network controller of the target cluster, where the adjustment instruction instructs the network controller to adjust a network bandwidth of the target cluster or adjust a quantity of network channels of the target cluster.

In a possible implementation, when the third duration is less than the first duration, and a difference between the first duration and the third duration is greater than a preset value, the adjustment instruction instructs the network controller to increase the network bandwidth of the target cluster or increase a quantity of network channels of the target cluster.

In a possible implementation, when the third duration is greater than the first duration, and a difference between the third duration and the first duration is greater than a preset value, the adjustment instruction instructs the network controller to decrease the network bandwidth of the target cluster or decrease a quantity of network channels of the target cluster.

In a possible implementation, the management module 701 and the proxy module 702 are deployed on one scheduler, and the scheduler is connected to the plurality of clusters.

In a possible implementation, the management module 701 is deployed on a scheduler, and the proxy module 702 is deployed in the target cluster.

The scheduler 700 shown in FIG. 7 corresponds to the job scheduling methods in embodiments shown in FIG. 4A and FIG. 4B to FIG. 6A and FIG. 6B. Therefore, for functions and technical effects of the scheduler 700, refer to related descriptions in embodiments shown in FIG. 4A and FIG. 4B to FIG. 6A and FIG. 6B. Details are not described herein again.

FIG. 8 is a schematic diagram of a structure of a scheduler according to an embodiment of this application. As shown in FIG. 8, a scheduler 800 includes a processor 801, a memory 802, a communication interface 803, and a bus 804. The processor 801, the memory 802, and the communication interface 803 communicate with each other by using the bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus. The communication interface 803 is configured to communicate with the outside, for example, to receive a job (and target data) submitted by a user by using a terminal or a client.

It should be understood that, in this embodiment of this application, the processor 801 may be a CPU. Alternatively, the processor 801 may be another general-purpose processor, a digital signal processor (DSP), an application-specific integrated circuit (ASIC), a field programmable gate array (FPGA) or another programmable logic device, a discrete gate or a transistor logic device, a discrete component assembly, or the like. The general-purpose processor may be a microprocessor, any conventional processor, or the like.

The memory 802 may include a read-only memory and a random access memory, and provide instructions and data to the processor 801. The memory 802 may further include a nonvolatile random access memory. For example, the memory 802 may further store information about a device type.

The memory 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores executable code. The processor 801 executes the executable code to perform the method performed by the foregoing management module 101, perform the method performed by the foregoing proxy module 102, or perform the method performed by the foregoing management module 101 and proxy module 102.

Specifically, when embodiments shown in FIG. 4A and FIG. 4B to FIG. 6A and FIG. 6B are implemented, and the management module 101 and the proxy module 102 described in embodiments shown in FIG. 4A and FIG. 4B to FIG. 6A and FIG. 6B are implemented by using software, software or program code required for performing functions of the management module 101 and the proxy module 102 in embodiments shown in FIG. 4A and FIG. 4B to FIG. 6A and FIG. 6B is stored in the memory 802. The processor 801 is configured to execute instructions in the memory 802, to implement the method performed by the management module 101, implement the method performed by the proxy module 102, or implement the method performed by the management module 101 and the proxy module 102.

It should be understood that the scheduler 800 in this embodiment of this application may correspond to the scheduler 700 in embodiments of this application, and may correspond to the management module 101 and the proxy module 102 in the methods shown in FIG. 4A and FIG. 4B to FIG. 6A and FIG. 6B in embodiments of this application. In addition, the foregoing and other operations and/or functions implemented by the scheduler 800 are respectively used to implement corresponding procedures of the methods in FIG. 4A and FIG. 4B to FIG. 6A and FIG. 6B. For brevity, details are not described herein again.

In addition, an embodiment of this application further provides a computer-readable storage medium. The computer-readable storage medium stores instructions. When the instructions are run on a scheduler, the scheduler is enabled to perform the method performed by the management module 101 and the proxy module 102 in the foregoing embodiments.

In addition, an embodiment of this application further provides a computer program product. When the computer program product is executed by a scheduler, the one or more schedulers perform any one of the foregoing job scheduling methods. The computer program product may be a software installation package. When the any one of the foregoing job scheduling methods needs to be used, the computer program product may be downloaded, and the computer program product may be executed on a computer.

In addition, it should be noted that the apparatus embodiments described above are merely examples. The units described as separate parts may or may not be physically separate, and parts displayed as units may or may not be physical units, may be located in one position, or may be distributed on a plurality of network units. A part or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

In the specification, claims, and accompanying drawings of this application, the terms "first", "second", and the like are intended to distinguish between similar objects but do not necessarily indicate a specific order or sequence. It should be understood that the terms used in this manner are interchangeable in proper circumstances, and this is merely a distinguishing manner used when objects with a same attribute are described in embodiments of this application.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is an optimal implementation in most cases. Based on such an understanding, the technical solutions of this application essentially, or the part contributing to a current technology may be implemented in a form of a software product. The computer software product is stored in a readable storage medium, for example, a floppy disk, a USB flash drive, a removable hard disk, an ROM, a RAM, a magnetic disk, or an optical disc on a computer, and includes several instructions for instructing a computer device (which may be a personal computer, a training device, or a network device) to perform the methods described in embodiments of this application.

All or a part of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or a part of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A scheduler, wherein the scheduler comprises a management module and a proxy module, and the scheduler is configured to manage a plurality of clusters, wherein
the management module is configured to:

   obtain a to-be-processed job;
   determine, from the plurality of clusters, a target cluster for processing the job; and
   deliver the job to the proxy module; and
   the proxy module is configured to indicate the target cluster to schedule a resource for the job, and obtain target data in a process of scheduling the resource for the job, wherein the target data is data required for executing the job.

2. The scheduler according to claim 1, wherein when determining, from the plurality of clusters, the target cluster for processing the job, the management module is specifically configured to:

   estimate first duration in which each of the plurality of clusters schedules a resource for the job;
   calculate second duration in which each of the plurality of clusters obtains the target data;
   use a larger value in the first duration and the second duration as waiting duration for the cluster to process the job; and
   use a cluster with smallest waiting duration in the plurality of clusters as the target cluster.

3. The scheduler according to claim 1, wherein the management module is further configured to:

   estimate first duration in which the target cluster schedules the resource for the job;
   calculate second duration in which the target cluster obtains the target data; and
   send the first duration and the second duration to the proxy module; and
   when indicating the target cluster to schedule the resource for the job, and obtain the target data in the process of scheduling the resource for the job, the proxy module is specifically configured to:
   when the first duration is greater than the second duration, indicate the target cluster to schedule the resource for the job, and obtain the target data in the process of scheduling the resource for the job.

4. The scheduler according to claim 1, wherein the management module is further configured to:

   estimate first duration in which the target cluster schedules the resource for the job;
   calculate second duration in which the target cluster obtains the target data; and
   send the first duration and the second duration to the proxy module; and
   when indicating the target cluster to schedule the resource for the job, and obtain the target data in the process of scheduling the resource for the job, the proxy module is specifically configured to:
   when the first duration is not greater than the second duration, indicate, at a first moment before indicating the target cluster to schedule the resource for the job, the target cluster to start to obtain the target data, and indicate, at a second moment, the target cluster to schedule the resource for the job, wherein duration of an interval between the first moment and the second moment is the second duration minus the first duration.

5. The scheduler according to claim 4, wherein when estimating the first duration in which the target cluster schedules the resource for the job, the management module is specifically configured to:

   determine a target category to which the job belongs;
   calculate average duration in which the target cluster schedules a resource for a historical job of the target category;
   obtain a currently available resource ratio and a historically available resource ratio that are of the target cluster, wherein the currently available resource ratio is a ratio of a resource quantity of currently available resources of the target cluster to a resource quantity of total resources, and the historically available resource ratio is a ratio of an average resource quantity of available resources of the target cluster in a time period before the target cluster schedules the resource for the job to the resource quantity of total resources; and
   estimate, based on the average duration, the currently available resource ratio, and the historically available resource ratio, the first duration in which the target cluster schedules the resource for the job.

6. The scheduler according to claim 1 or 3, wherein the proxy module is further configured to:
monitor third duration in which the target cluster schedules the resource for the job, and indicate, based on the third duration and the first duration, the management module to send an adjustment instruction to a network controller of the target cluster, wherein the adjustment instruction instructs the network controller to adjust a network bandwidth of the target cluster or adjust a quantity of network channels of the target cluster.

7. The scheduler according to claim 6, wherein when the third duration is less than the first duration, and a difference between the first duration and the third duration is greater than a preset value, the adjustment instruction instructs the network controller to increase the network bandwidth of the target cluster or increase the quantity of network channels of the target cluster.

8. The scheduler according to claim 6, wherein when the third duration is greater than the first duration, and a difference between the third duration and the first duration is greater than a preset value, the adjustment instruction instructs the network controller to decrease the network bandwidth of the target cluster or decrease the quantity of network channels of the target cluster.

9. The scheduler according to any one of claims 1 to 8, wherein the management module and the proxy module are deployed on one computing device, and the computing device is connected to the plurality of clusters.

10. The scheduler according to any one of claims 1 to 8, wherein the management module is deployed on a computing device, and the proxy module is deployed in the target cluster.

11. A job scheduling method, wherein the method is applied to a scheduler, the scheduler comprises a management module and a proxy module, and the method comprises:

    obtaining, by the management module, a to-be-processed job;
    determining, by the management module from a plurality of clusters, a target cluster for processing the job;
    delivering, by the management module, the job to the proxy module; and
    indicating, by the proxy module, the target cluster to schedule a resource for the job, and obtain target data in a process of scheduling the resource for the job, wherein the target data is data required for executing the job.

12. The method according to claim 11, wherein the determining, by the management module from a plurality of clusters, a target cluster for processing the job comprises:

    estimating, by the management module, first duration in which each of the plurality of clusters schedules a resource for the job;
    calculating, by the management module, second duration in which each of the plurality of clusters obtains the target data;
using, by the management module, a larger value in the first duration and the second duration as waiting duration for the cluster to process the job; and
using, by the management module, a cluster with smallest waiting duration in the plurality of clusters as the target cluster.

13. The method according to claim 11, wherein the method further comprises:

    estimating, by the management module, first duration in which the target cluster schedules the resource for the job;
    calculating, by the management module, second duration in which the target cluster obtains the target data;
    sending, by the management module, the first duration and the second duration to the proxy module; and
    the indicating, by the proxy module, the target cluster to schedule a resource for the job, and obtain target data in a process of scheduling the resource for the job comprises:
    when the first duration is greater than the second duration, indicating, by the proxy module, the target cluster to schedule the resource for the job, and obtain the target data in the process of scheduling the resource for the job.

14. The method according to claim 11, wherein the method further comprises:

    estimating, by the management module, first duration in which the target cluster schedules the resource for the job;
    calculating, by the management module, second duration in which the target cluster obtains the target data;
    sending, by the management module, the first duration and the second duration to the proxy module; and
    the indicating, by the proxy module, the target cluster to schedule a resource for the job, and obtain target data in a process of scheduling the resource for the job comprises:
    when the first duration is not greater than the second duration, indicating, by the proxy module at a first moment before indicating the target cluster to schedule the resource for the job, the target cluster to start to obtain the target data, and indicating, at a second moment, the target cluster to schedule the resource for the job, wherein duration of an interval between the first moment and the second moment is the second duration minus the first duration.

**15.** The method according to claim 14, wherein the estimating, by the management module, first duration in which the target cluster schedules the resource for the job comprises:

determining, by the management module, a target category to which the job belongs;
calculating, by the management module, average duration in which the target cluster schedules a resource for a historical job of the target category;
obtaining, by the management module, a currently available resource ratio and a historically available resource ratio that are of the target cluster, wherein the currently available resource ratio is a ratio of a resource quantity of currently available resources of the target cluster to a resource quantity of total resources, and the historically available resource ratio is a ratio of an average resource quantity of available resources of the target cluster in a time period before the target cluster schedules the resource for the job to the resource quantity of total resources; and
estimating, by the management module based on the average duration, the currently available resource ratio, and the historically available resource ratio, the first duration in which the target cluster schedules the resource for the job.

**16.** The method according to claim 11 or 13, wherein the method further comprises:

monitoring, by the proxy module, third duration in which the target cluster schedules the resource for the job; and
indicating, by the proxy module based on the third duration and the first duration, the management module to send an adjustment instruction to a network controller of the target cluster, wherein the adjustment instruction instructs the network controller to adjust a network bandwidth of the target cluster or adjust a quantity of network channels of the target cluster.

**17.** The method according to claim 16, wherein when the third duration is less than the first duration, and a difference between the first duration and the third duration is greater than a preset value, the adjustment instruction instructs the network controller to increase the network bandwidth of the target cluster or increase the quantity of network channels of the target cluster.

**18.** The method according to claim 16, wherein when the third duration is greater than the first duration, and a difference between the third duration and the first duration is greater than a preset value, the adjustment instruction instructs the network controller to decrease the network bandwidth of the target cluster or decrease the quantity of network channels of the target cluster.

**19.** The method according to any one of claims 11 to 18, wherein the management module and the proxy module are deployed on the scheduler, and the scheduler is connected to the plurality of clusters.

**20.** The method according to any one of claims 11 to 18, wherein the management module is deployed on the scheduler, and the proxy module is deployed in the target cluster.

**21.** A scheduler, wherein the scheduler comprises a processor and a memory, the memory stores program instructions, and the processor runs the program instructions to perform the steps performed by the management module and the proxy module in the method according to any one of claims 11 to 20.

**22.** A computer-readable storage medium, wherein the computer-readable storage medium stores instructions, and when the instructions are run on a scheduler, the scheduler is enabled to perform the method according to any one of claims 11 to 20.

**23.** A computer program product comprising instructions, wherein when the computer program product runs on a scheduler, the scheduler is enabled to perform the method according to any one of claims 11 to 20.

**Centralized networking**

FIG. 1

**Non-centralized networking**

FIG. 2

FIG. 3

A user
submits a
job

**Management
module 101**

**Proxy
module 102**

**Target
cluster**

S401: Obtain the to-be-
processed job

S402: Determine the target cluster from a
plurality of clusters

S4021: Estimate first duration in which
each cluster schedules a resource for the job

S4022: Calculate second duration in which
each cluster obtains target data

S4023: Use a larger value in the first
duration and the second duration of each
cluster as waiting duration of the cluster

S4024: Determine a cluster with smallest
waiting duration as the target cluster

S403: Deliver the job to
the proxy module 102

TO FIG. 4B

FIG. 4A

EP 4 560 471 A1

S404: Indicate the target cluster to obtain the target data in a process of scheduling a resource for the job

S4041: Obtain first duration $T_q$ in which the target cluster schedules the resource for the job and second duration $T_t$ in which the target cluster obtains the target data

S4042: Compare the first duration $T_q$ and the second duration $T_t$

S4043: When $T_q$ is greater than $T_t$, indicate the target cluster to schedule the resource for the job, and obtain the target data in the process of scheduling the resource for the job

S4044: When $T_q$ is not greater than $T_t$, indicate, at a moment 2, the target cluster to obtain the target data, and indicate, at a moment 1, the target cluster to schedule the resource for the job, where duration of an interval between the moment 2 and the moment 1 is a difference between $T_q$ and $T_t$

Indicate to schedule the resource

Receive the target data sent by another cluster

FIG. 4B

EP 4 560 471 A1

**Target cluster**

**Proxy module 102**

**Management module 101**

A user submits a job

S501: Obtain the to-be-processed job

S502: Estimate first duration in which each cluster schedules a resource for the job

S503: Calculate transmission duration in which each cluster obtains target data

S504: Use a larger value in the first duration and the second duration of each cluster as waiting duration of the cluster

S505: Determine a cluster with smallest waiting duration as the target cluster

S506: Deliver the job to the proxy module 102

S507: Obtain first duration $T_q$ in which the target cluster schedules a resource for the job and second duration $T_t$ in which the target cluster obtains the target data

TO FIG. 5B

FIG. 5A

S508: Compare the first duration $T_q$ and the second duration $T_t$

S509: When $T_q$ is greater than $T_t$, indicate the target cluster to schedule the resource for the job, and obtain the target data in a process of scheduling the resource for the job

Indicate to schedule the resource

Receive the target data sent by another cluster

S510: When $T_q$ is not greater than $T_t$, indicate, at a moment 2, the target cluster to obtain the target data, and indicate, at a moment 1, the target cluster to schedule the resource for the job, where duration of an interval between the moment 2 and the moment 1 is a difference between $T_q$ and $T_t$

Indicate to schedule the resource

Receive the target data sent by another cluster

Third duration $T_q{}'$

S511: Monitor the third duration $T_q{}'$ in which the target cluster schedules the resource for the job

S512: Determine whether $T_q{}'$ is less than $T_q$, and whether a difference between $T$ and $T_q{}'$ is less than a preset value

Yes

Adjustment instruction

S513: Indicate the management module 101 to send an adjustment instruction to a network controller of the target cluster, where the adjustment instruction instructs the network controller to adjust a network bandwidth of the target cluster or adjust a quantity of network channels of the target cluster

FIG. 5B

EP 4 560 471 A1

S601: A management module 101 obtains, from a proxy module 102, a plurality of bandwidth adjustment requests for different jobs in a target cluster

S602: The management module 101 obtains, through calculation, an update volume of a network bandwidth of the target cluster based on the plurality of bandwidth adjustment requests

S603: The management module 101 determines, based on the update volume, whether to perform expansion or reduction

Expansion

Reduction

S604: The management module 101 determines 101 whether a network bandwidth of a current network channel of the target cluster reaches an upper limit

S610: The management module 101 determines, based on the update volume, a network channel that needs to be released

S611: The management module 101 releases the determined network channel

TO FIG. 6B

TO FIG. 6B

TO FIG. 6B

FIG. 6A

CONT. FROM
FIG. 6A

CONT. FROM
FIG. 6A

CONT. FROM
FIG. 6A

No

Yes

S605: The management module 101 requests, based on the update volume, a network controller to increase the network bandwidth of the network channel of the target cluster

S606:
The management module 101 determines whether a volume of this bandwidth adjustment matches the update volume

No

Yes

Local bandwidth adjustment ends

S608: The management module 101 creates a new network channel for the target cluster

Yes

S607: The management module 101 determines whether a network channel can be added to the target cluster

No

S609: The management module 101 determines that bandwidth adjustment for the target cluster has reached the upper limit

S612:
The management module 101 determines whether a volume of this bandwidth adjustment matches the update volume

Yes

No

Local bandwidth adjustment ends

S613:
The management module 101 determines whether a network bandwidth of a remaining network channel reaches a lower limit

Yes

No

S614: The management module 101 performs reduction on the target cluster

FIG. 6B

700

701

**Management module**

702

**Proxy module**

FIG. 7

Processor 801

Communication interface 803

Bus 804

Management module 101

Proxy module 102

Memory 802

Scheduler 800

FIG. 8

**EP 4 560 471 A1**

## INTERNATIONAL SEARCH REPORT

| International application No. |
|---|
| **PCT/CN2023/101278** |

| A. | CLASSIFICATION OF SUBJECT MATTER |
|---|---|

G06F9/48(2006.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, ENTXT, IEEE, CNKI, 百度, BAIDU: 调度, 集群, 作业, 任务, 资源, 数据, 同时, 通道, 数量, 带宽, schedule, dispatch, cluster, task, resource, data, fault+, meanwhile, channel, number, bandwidth

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111405055 A (BEIJING DAJIA INTERCONNECTION INFORMATION TECHNOLOGY CO., LTD.) 10 July 2020 (2020-07-10) description, paragraphs [0068]-[0103], and figures 1-4 | 1-23 |
| A | CN 110247979 A (BEIJING UNIVERSITY OF POSTS AND TELECOMMUNICATIONS) 17 September 2019 (2019-09-17) entire document | 1-23 |
| A | CN 110457397 A (SHENZHEN QIANHAI WEBANK CO., LTD.) 15 November 2019 (2019-11-15) entire document | 1-23 |
| A | CN 112486658 A (HUAKONG TSINGJIAO INFORMATION SCIENCE (BEIJING) CO., LTD.) 12 March 2021 (2021-03-12) entire document | 1-23 |
| A | CN 114490002 A (SHANGHAI ZHENLIANG INTELLIGENT TECHNOLOGY CO., LTD.) 13 May 2022 (2022-05-13) entire document | 1-23 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2023** | **25 September 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/101278** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114661462 A (ALIBABA (CHINA) CO., LTD.) 24 June 2022 (2022-06-24)<br>      entire document | 1-23 |
| A | WO 2018206994 A1 (BULL SAS) 15 November 2018 (2018-11-15)<br>      entire document | 1-23 |
|  | US 2021096996 A1 (MICROSOFT TECHNOLOGY LICENSING LLC) 01 April 2021<br>(2021-04-01) |  |

Form PCT/ISA/210 (second sheet) (July 2022)

**INTERNATIONAL SEARCH REPORT**
Information on patent family members

International application No.

**PCT/CN2023/101278**

| Patent document cited in search report | | | Publication date (day/month/year) | Patent family member(s) | | | Publication date (day/month/year) |
|---|---|---|---|---|---|---|---|
| CN | 111405055 | A | 10 July 2020 | None | | | |
| CN | 110247979 | A | 17 September 2019 | None | | | |
| CN | 110457397 | A | 15 November 2019 | None | | | |
| CN | 112486658 | A | 12 March 2021 | None | | | |
| CN | 114490002 | A | 13 May 2022 | None | | | |
| CN | 114661462 | A | 24 June 2022 | None | | | |
| WO | 2018206994 | A1 | 15 November 2018 | EP | 3622395 | A1 | 18 March 2020 |
| US | 2021096996 | A1 | 01 April 2021 | US | 11055225 | B2 | 06 July 2021 |
| | | | | US | 2021286728 | A1 | 16 September 2021 |
| | | | | US | 11474945 | B2 | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210988472